# EUROPÄISCHE PATENTANMELDUNG

(11) **EP 0 639 546 A1**
(43) Veröffentlichungstag der Anmeldung: **22.02.1995**
(21) Anmeldenummer: 94112699.7
(22) Anmeldetag: 13.08.1994
(51) Int. Cl.: C05G 3/00, A01C 21/00, A01G 9/10

(54) **Werkstoff mit Langzeit-Düngewirkung sowie daraus hergestellte Düngemittelstäbe und Pflanzentöpfe**

(30) Priorität: 18.08.1993 DE 9312332 U; 21.08.1993 DE 9312557 U; 26.01.1994 DE 9401313 U; 26.01.1994 DE 4402252
(71) Anmelder: VERWALTUNGSGESELLSCHAFT GEIGER TECHNIK GmbH & Co. KG, D-82467 Garmisch-Partenkirchen (DE)
(72) Erfinder: Geiger, Albert, D-82467 Garmisch-Partenkirchen (DE)
(74) Vertreter: Flosdorff, Jürgen, Dr.

(57) **Zusammenfassung**

Ein vorzugsweise pulverförmiges Düngemittel wird mit einem biologisch abbaubaren, plastifizierbaren, in Teilchenform vorliegenden Werkstoff vermischt das Düngemittel-Werkstoff-Gemisch bevorzugt in einem Extruder erhitzt, plastifiziert und extrudiert. Der Werkstoff ist ein Kunststoff auf der Basis NWR, der in feuchter Erde innerhalb einer durch die Art des Werkstoffs einstellbaren Zeit verrottet und dabei allmählich die eingeschlossenen Düngemittelpartikel freisetzt. Aus dem Düngemittel-Werkstoff-Gemisch werden Düngemittelstäbe, die z.B. mit einem Schlagwerkzeug in den Boden eintreibbar sind, und Pflanztöpfe hergestellt.

## Beschreibung

Die Erfindung betrifft allgemein ein Düngemittel-Werkstoff-Gemisch sowie daraus hergestellte Düngemittelstäbe und Pflanztöpfe mit Langzeit-Düngewirkung.

Bei der Verwendung von Pflanzendünger besteht das Problem, daß eine Überdüngung unbedingt zu vermeiden ist, da diese das Pflanzenwachstum nicht fördert, sondern im Gegenteil zu einer tiefgreifenden Schädigung der Pflanzen führen kann. Herkömmlicher Pflanzendünger, dessen Wirkstoffe zur sofortigen Aufnahme durch die Pflanzenwurzel freiliegen, sollte daher möglichst stetig in kleiner Dosierung eingebracht werden, beispielsweise in einer im Gießwasser gelösten oder mit Gießwasser vermischten Form. Diese regelmäßige Düngung von Pflanzen hat aber den Nachteil, daß sie mit einem hohen Arbeitsaufwand verbunden ist.

Die vorliegende Erfindung sieht vor, daß Düngemittel mit einem biologisch abbaubaren, plastifizierbaren Werkstoff vermischt wird, wobei es sich vorzugsweise um einen Kunststoff auf der Basis NWR (Nachwachsende Rohstoffe) handelt. Ganz allgemein schließt dies natürliche, naturnahe und polymermodifizierte nachwachsende Kunststoffe ein, wobei dem Werkstoff zur Steuerung seiner Verrottungszeit auch chemisch hergestellte Kunststoffe beigemischt sein können. Auch rein chemisch hergestellte Kunststoffe und Recycling-Kunststoff sind einsetzbar. Als Düngemittel kann herkömmlicher Pflanzendünger beispielsweise in flüssiger Form, bevorzugt jedoch in Pulverform verwendet werden, wobei Voraussetzung ist, daß das Düngemittel bei dem bevorzugt vorgesehenen Verfahrensschritt der Erhitzung und Plastifizierung des Düngemittel-Werkstoff-Gemischs nicht zersetzt bzw. unwirksam wird.

Als Beispiel für den verwendeten Werkstoff seien Kunststoffe auf Stärke-, Rizinus- oder Rapsbasis und Polyalkohole und für das Düngemittel Stickstoff, Phosphat, Nitrophosphat und Spurenelemente genannt, wobei das Düngemittel zweckmäßigerweise im Umfang von etwa 1,5 - 50, bevorzugt 1,5 - 5,0 Gewichtsprozent beigemischt wird.

Das erfindungsgemäße Pflanzendünger-Kunststoff-Gemisch besteht somit aus einem in feuchter Erde verrottbaren, biologisch abbaubaren Werkstoff oder Kunststoff, in den weitgehend gleichmäßig verteilt der Düngemittelwirkstoff, bevorzugt in Form kleiner fester Teilchen, eingeschlossen ist. Ein geringer Teil des Düngemittels befindet sich dabei am Außenumfang der Pflanzendüngerteilchen und liegt nach außen frei, so daß dieser Anteil direkt in das Erdreich abgegeben wird. Die in den Werkstoff bzw. Kunststoff eingebetteten Pflanzendüngerpartikel werden erst im Laufe der Verrottung des nachfolgend nur noch als Kunststoff bezeichneten Werkstoffs freigesetzt, wobei die Verrottungszeit durch die Art des verwendeten Materials und durch die Teilchengröße festgelegt werden kann.

Auf diese Weise bildet jedes dieser Pflanzendüngerteilchen ein Düngemitteldepot, aus dem über einen langen Zeitraum weitgehend gleichmäßig Düngemittel-Wirkstoff an das Erdreich abgegeben wird.

Das erfindungsgemäße Material ist insbesondere dann, wenn das Düngemittel-Kunststoff-Gemisch in einem Extruder erhitzt und plastifiziert und extrudiert wird, mit geringen Kosten herstellbar.

Bevorzugt wird das Düngemittel mit dem Kunststoff vor Zuführung in den Extruder vermischt. Dies kann beispielsweise in einem dem Extruder vorgeschalteten Behälter mit einem Rührwerk erfolgen. Um eine gleichmäßige Vermischung zu fördern, können die Kunststoffteilchen mit einem Haftvermittler versehen werden, der beispielsweise auf die Kunststoffteilchen aufgesprüht wird und zur Folge hat, daß Düngemittelpulver an der Außenfläche der Kunststoffteilchen anhaftet.

Es liegt im Rahmen der Erfindung, zusätzlich zu dem Düngemittel oder aber anstelle des Düngemittels Insektizide, Pestizide, Fungizide, Herbizide, Wachstumsregulatoren oder bestimmte Nährstoffe in den beschriebenen Werkstoff bzw. Kunststoff einzubetten.

Der plastifizierbare Werkstoff wird erfindungsgemäß zur Herstellung von Düngemittelstäben und Pflanztöpfen eingesetzt, wobei zunächst die Düngemittelstäbe beschrieben werden.

Für die Baumsanierung soll ein Düngemittel einer zum Boden des Baumstandortes passenden Zusammensetzung, d.h. ein Düngemittel, das inbesondere die Stoffe enthält, die der Boden des Baumstandortes bezüglich der auf ihm stehenden Bäume nicht oder nicht in ausreichender Menge enthält, um den Baumstamm herum an die Wurzeln herangebracht werden. Die Methode, dieses Düngemittel als Pulver einfach auf den Boden in Wurzelnähe zu schütten, hat sich deshalb nicht bewährt, weil es einerseits Feuchtigkeit für das Eindringen in den Boden erfordert und vor dem Eindringen durch Wind weggetragen werden kann, andererseits durch heftige Regenfälle weggeschwemmt oder durch Tiere verstreut werden kann. Die wirkungsvollere Sanierung erfolgt durch zwischen den Wurzeln des zu sanierenden Baumes senkrecht in den Boden eingebrachte Bohrungen, in die ein flüssiges oder pulverförmiges Düngemittel eingefüllt wird. Da aber in vielen Fällen der Boden um die Bäume herum oder der Baumstandort überhaupt (z.B. im Gebirge) schwer zugänglich ist, und auch weil wegen der unsichtbaren Wurzeln das Einbringen der Löcher mit Gefühl geschehen muß, können Erdbohrmaschinen meistens nicht eingesetzt werden, d.h. die Löcher müssen kraft- und zeitaufwendig mit der Hand gebohrt werden.

Dieses Problem wird durch einen in das Erdreich, z.B. mit Hammerschlägen, eintreibbaren Stab gelöst, der aus dem erfindungsgemäßen Werkstoff besteht, also aus einem biologisch abbaubaren und damit im Erdreich verrottenden Kunststoff, dem vor der Ausformung zu Stäben ein Düngemittel oder eine Düngemittelmischung beigegeben wurde. Die daraus gefertigten Stäbe sind sehr fest und gehen auch durch auf ihre Stirnfläche ausgeübte Hammerschlägen nicht zu Bruch.

Die erfindungsgemäßen Stäbe verrotten im feuchten Milieu, wie es in den meisten baumbestandenen Gegenden, über das Jahr gerechnet, zumindest häufig vorkommt, vollständig und geben während dieser Verrottung das Düngemittel an ihre Umgebung, d.h. die Baumwurzeln, ab. Die Verrottungszeit kann, wenn eine gewisse Bodenfeuchtigkeit vorausgesetzt wird, in Abhängigkeit von dem abbaubaren Kunststoff bzw. Additiven zu diesem und/oder dem Stabquerschnitt eingestellt werden und z.B. 4 bis 24 Monate betragen.

Die Bemischung des Düngemittels zum Kunststoff vor dessen Verformung zu Stäben erfolgt in einer Menge, die die Druckfestigkeit der Stäbe abhängig von deren Querschnitt nicht bzw. soweit nicht beeinflußt, daß diese in das Erdreich eingetrieben werden können, z. B. mit Hammerschlägen, in leichtem Boden aber auch durch Eindrücken mit den Händen oder Füssen.

Die erfindungsgemäßen Stäbe können in mehreren Längen und mit unterschiedlichen, zweckmäßig außen -z.B. farblich kenntlich gemachten- Düngemitteln oder -mischungen bereitgehalten werden, oder es können auch längere Stäbe ausgeliefert werden, die sich der Verbraucher selber auf die gewünschte Länge zurechtsägen und die er am Ende, z.B. mit einer Raspel, anschärfen kann.

Die Stäbe können als Stange extrudiert und danach konfektioniert, d.h. abgelängt und mit einer Spitze versehen, oder sie können im Spritzverfahren in entsprechenden Spritzformen gleich in gewünschter Länge mit angeformter Spitze hergestellt werden.

Die Stäbe können auch aus Bestandteil der Erfindung bildenden Stabsegmenten zusammengesetzt sein, die es dem Benutzer erlauben, sich in Sprüngen von der Länge eines Elements, z.B. 50 mm, die gewünschte Länge eines Stabes entsprechend dem Bedarf am jeweiligen Ort auszuwählen.

Mit dem sogenannten Coextrudierverfahren können auch Stäbe aus mehreren, z.B. drei Schichten hergestellt werden. Wenn dabei z.B. die äußere ringförmige Schicht viel, die mittlere ringförmige Schicht weniger und die innere Schicht noch weniger Düngemittel vor der Ausformung zugemischt erhält, würde die äußere Schicht bei verhältnismäßig schneller Verrottung viel, die mittlere Schicht bei langsamer bzw. späterer Verrottung weniger und die innere Schicht zum Schluß nur noch sehr wenig Düngemittel abgeben, was in vielen Fällen für die Baumsanierung günstig sein kann. Ebenso können auf diese Weise unterschiedliche Düngemittel nacheinander an Pflanzen herangebracht werden oder es kann dadurch, daß der inneren Schicht gar kein Düngemittel oder nur wenig beigemischt ist, dem Stab als Ganzes trotz größeren Düngemittelbeimischung in den äußeren Schichten seine erforderliche Festigkeit erhalten werden.

Der Querschnitt der Stäbe kann beliebig und dem Boden, in den sie eingebracht werden, angepaßt und z.B. rechteckig, kreisrund oder sternförmig bzw. mit abstehenden Rippen versehen sein.

Es wird nun auf den erfindungsgemäßen Pflanztopf eingegangen. Zur Aufzucht von Pflanzen werden Töpfe, Topferde und Dünger benötigt. In Gärtnereien und Baumschulen, aber auch bei vielen nicht gewerblichen Gärtnern mußte schon lange der früher übliche Tontopf Kunststofftöpfen weichen, weil diese in der Herstellung billiger als Tontöpfe und geringer im Gewicht sind. Aber auch der Einsatz von Kunststofftöpfen hat Nachteile, z.B. die, daß große und schwierig zu entsorgende Mengen anfallen - im Jahre 1992 in Deutschland etwa 250.000.000 Stück. Nur wenige einmal benutzte Kunststofftöpfe werden ein zweites oder drittes Mal verwendet. Außerdem haben sie natürlich auch den bisher bekannten Töpfen überhaupt anhaftenden Nachteil, daß die eingetopfen Pflanzen, solange sie sich in der Obhut von Gärtnereien oder der von ihnen belieferten Kleingärtnereien und Händlern befinden, abhängig vom Wachstum mit einigem Arbeitsaufwand umgetopf werden müssen. Das gleiche gilt für Baumschulen. Wenn eine größere Zahl von Gewächsen endgültig eingepflanzt werden, z.B. in Anlagen, Parks und dergl., fällt auch der Arbeitsaufwand für das Austopfen ins Gewicht.

Die Erfindung sieht einen Pflanztopf vor, der aus dem erfindungsgemäßen Werkstoff besteht, d.h. aus einem verrottbaren Kunststoff, dem ein Düngemittel beigemischt ist.

Düngemittelanteile von 2 bis 3 g je Liter Topfvolumen haben sich als zweckmäßige Dosierung herausgestellt.

Bei derartigen Töpfen dient demnach der von der Gärtnerei eingesetzte Topf nach der Auslieferung an den Händler sozusagen als "düngende Verpackung", der vom Endabnehmer so, wie er ihn mit der Pflanze erhält, eingepflanzt wird, wonach der verrottende Topf das Düngemittel im Maße der Verrottung an die Pflanze abgibt.

Da der Topf das Düngemittel nicht nur nach innen an die Pflanze, sondern auch nach außen abgibt, kann es zweckmäßig sein, den Topf außen mit einer ebenfalls biologisch abbaubaren Schutzschicht, z.B. Wachs, auszurüsten.

Da die Abgabe des Düngemittels an die Wurzeln der Pflanze erst bei einsetzender Verrottung des Topfes beginnt, diese aber erst einsetzt, wenn er sich in feuchtem Milieu befindet, kann für die Fälle, in denen schon vorher eine Düngung oder stärkere Düngung geboten erscheint, nach einem weiteren Erfindungsgedanken der Pflanztopf mit einer Parkmöglichkeit für ein Düngedepot-Element versehen sein. Dadurch ist das Dünge-Element immer zur Hand und kann dann eingesetzt werden, wenn es benötigt wird. So kommt es z.B. häufig vor, daß Baumschulware bereits im Spätherbst eines Jahres eingepflanzt wird, aber erst im Frühjahr oder Frühsommer des folgenden Jahres wachsen soll.

Die Erfindung ist in der Zeichnung an einigen Beispielen dargestellt, die nur eine Auswahl der von ihr erfaßten Möglichkeiten veranschaulichen können. Unter Bezugnahme auf die Zeichnung ist die Erfindung beispielsweise erläutert. Es stellen dar:
- Fig. 1: eine Seitenansicht eines erfindungsgemäßen Düngemittelstabes in etwa natürlichem Maßstab;
- Fig. 2A und 2B: Aufsichten auf den Stab nach Fig. 1 zur Darstellung des Bereichs der Möglichkeiten der Querschnittsgestaltung;
- Fig. 3: eine Seitenansicht eines aus einem Stab nach Fig. 1 entwickelten Stabsegments für die Bildung von Düngemittelstäben aus mehreren Segmenten, teilweise geschnitten;
- Fig. 4: eine abgewandelte Ausführungsform eines Stabsegments im Vertikalschnitt;
- Fig. 5: eine Aufsicht auf den Gegenstand der Fig. 4;
- Fig. 6: einen erfindungsgemäßen Pflanztopf.

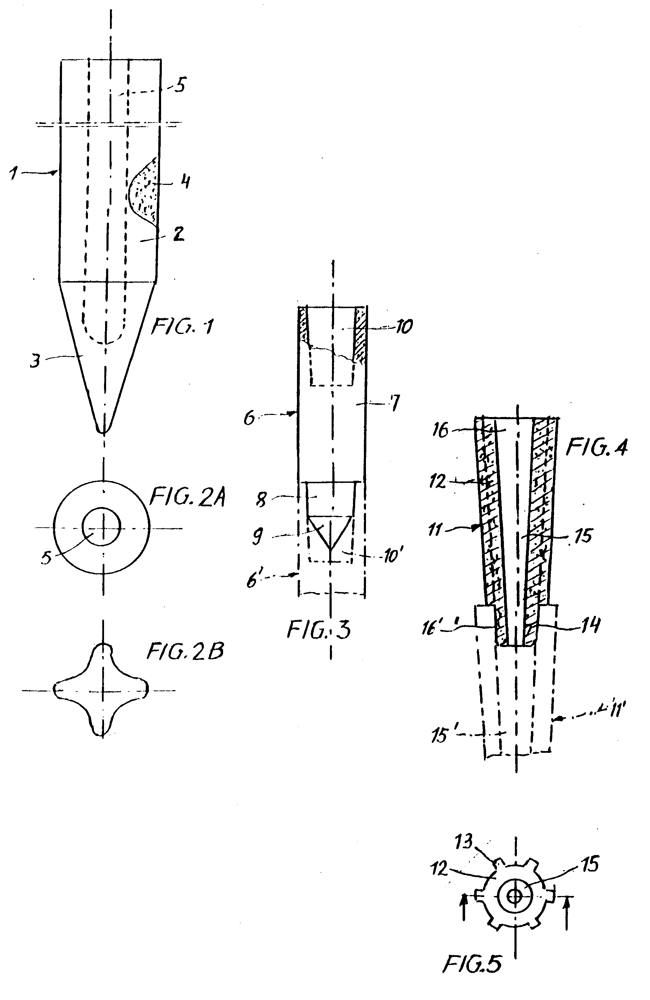

Der in den Fig. 1 und 2 veranschaulichte, allgemein mit 1 bezeichnete Düngemittelstab, wie er z.B. in einer Mehrfachspritzform aus einem verrottbaren Kunststoff auf NWR-Basis, dem vor der Plastifizierung im Extruder ein Düngemittel beigemischt wurde, im Spritzverfahren hergestellt werden kann, besteht aus einem zylindrischen Stabkörper 2 und einer Eintreibspitze 3, die natürlich schlanker als aus Platzgründen dargestellt, gestaltet sein kann. Das sich während der Plastifizierung des Werkstoffs im Extruder und damit auch im gespritzten Körper gleichmäßig verteilende Düngemittel ist mit 4 bezeichnet.

Ein solcher Stab weist eine genügende Festigkeit auf, um auch durch Hammerschläge auf die der Eintreibspitze 3 gegenüberliegende Stirnfläche in das eine zu düngende Pflanze umgebende Erdreich eingetrieben werden zu können.

Die sich im allgemeinen nach der Jahreszeit der Düngung und der gewünschten Einwirkungszeit des Düngers auf die Pflanze richtende Verrottungszeit kann durch den Stabquerschnitt und/oder Additive zum Kunststoff eingestellt werden. Um die Verrottungszeit durch den Querschnitt einstellen zu können, kann der Stabkörper eine oder mehrere axiale Bohrungen oder Ausnehmungen, z. B. eine Zentralbohrung 5, aufweisen. Das beigemischte und in der Kunststoffmatrix verhältnismäßig gleichmäßig verteilte Düngemittel wird dann gemäß der Verrottung an das umgebende Erdreich und damit auch an die Pflanzenwurzel abgegeben.

Die Fig. 2A und 2B zeigen zwei mögliche Querschnittsformen aus der Fülle möglicher Variationen, nämlich einmal kreisrund und einmal sternförmig mit abgerundeten Spitzen und abgerundeten Übergängen zwischen den Sternarmen.

Das Eintreiben in das Erdreich kann, wie bereits gesagt, erleichtert werden, wenn sich an den Stabkörper 2 eine längere und damit schlankere Eintreibspitze 3 anschließt, oder der gesamte Stab konisch gestaltet ist.

Um dem Benutzer die Arbeit zu ersparen, von einem Düngemittelstab die für die jeweilige Anwendung geeignete Länge abschneiden oder absägen oder sich aus einer Auswahl in unterschiedlichen Längen vorgefertigter Stäbe die voraussichtlich geeignete Länge heraussuchen zu müssen, kann ein solcher Düngemittelstab erfindungsgemäß auch aus zwei oder mehr Segmenten zusammengesetzt werden. Ein Ausführungsbeispiel eines erfindungsgemäßen Stabsegments ist in der Seitenansicht, teilweise geschnitten, in Fig. 3 dargestellt. Dieses allgemein mit 6 bezeichnete Stabsegment besteht aus einem zylindrischen Segmentkörper 7, der in zweckmäßig konischen Steckzapfen 8 endet, der, wie dargestellt, wiederum in einer das Eintreiben weiter erleichternden Spitze 9 enden kann. Auf der dem Steckzapfen 8 gegenüberliegenden Seite des Segmentkörpers 7 ist dieser mit einer dem Steckzapfen in Weite und Länge angepaßten Vertiefung 10 versehen.

Wie andere Segmente 6, 6'... zu einem Düngemittelstab zusammengesetzt werden können, ist in Fig. 3 an einem strichpunktiert eingezeichneten Oberteil eines weiteren Segments 6' mit oberer Vertiefung 10' veranschaulicht. Wenn die Passungen von Zapfen 8 mit Spitze 9 einerseits und Vertiefung 10 andererseits entsprechend gewählt sind, entsteht nach dem Zusammenstecken mehrerer Segmente ein fester Stab, der auch durch Hammerschläge auf das oberste Segment ohne Knicken in das Erdreich eingetrieben werden kann.

Für die Anwendung können z.B. zwei oder drei Segmente 6, 6'... zusammengesteckt und dann soweit in das Erdreich eingetrieben werden, bis der obere Abschnitt des oberen Segments noch über dem Boden übersteht. Fühlt man dann keinen Widerstand, wie er z. B. durch eine dickere Wurzel, einen Stein oder dergl.entstehen würde, kann ein weiteres Element aufgesetzt und dann der so gebildete verlängerte Stab weiter eingetrieben werden, bis ein Stück des zuletzt aufgesetzten Elements noch über dem Boden übersteht und so weiter verfahren werden, bis man auf Widerstand stößt oder die gewünschte Stablänge erreicht hat. Damit ist man nicht darauf angewiesen, für jeden Stab vor dem Eintreiben die richtige Länge abschätzen oder einen Überstand absägen zu müssen.

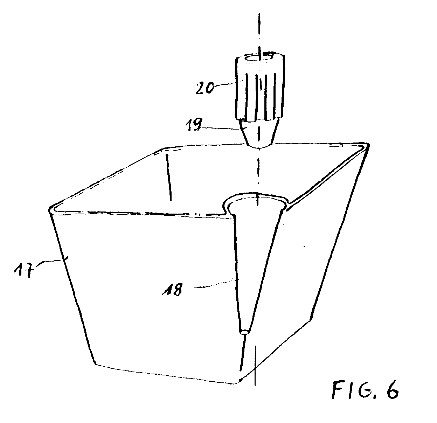

Eine aus der Ausführungsform nach Fig. 3 weiterentwickelte Ausführungsform eines allgemein mit 11 bezeichneten Stabsegments veranschaulichen die Fig. 4 und 5. Es besteht aus einem über die gesamte Länge leicht konischen Segmentkörper 12. Durch äußere Verstärkungsrippen 13, die nicht die ganze Länge des Segmentkörpers 12 einnehmen, entsteht ein Absatz oder eine Stufe, und der über die Rippen hinausgehende Teil wird dadurch ein dem Zapfen 8 nach Fig. 3 entsprechender Steckzapfen 14.

Das Segment besitzt ferner über seine gesamte Länge eine axiale Bohrung oder einen Kanal 15, dessen Konizität der des Elements entspricht, so daß ein oberer, nahe der oberen Stirnfläche liegender Bereich 16 der Konizität des zweckmäßig unten angefasten Steckzapfens 14 angepaßt ist.

Ein Segment nach den Fig. 4 und 5 kann dann, ebenso wie ein Segment 6 nach Fig. 3, mit einem oder mehreren gleichen, strichpunktiert angedeuteten Segmenten 11' durch Einstecken des Steckzapfens 14 in den oberen Abschnitt 16' der Bohrung 15' zu einem Stab gewünschter Länge zusammengefügt werden, wobei zweckmäßig die Zapfen 14 soweit in die Öffnung 16' eingedrückt werden, bis die Rippen 13 auf der Stirnfläche von 11' aufsitzen. Falls dies wegen der zweckmäßig engen Passung nicht ganz gelingt, so wird der verbleibende geringe Spalt beim Eintreiben des Gesamtstabes in das Erdreich überwunden werden.

Die Segmente 11 können auch ohne Rippen 13 kreisrund ausgeführt sein, weil ihre Konizität im Zusammenwirken mit der entsprechenden Konizität der Zentralbohrung 15 eine bestimmte vorgegebene Eintreiblänge des dann den Steckzapfen bildenden unteren Teils bestimmt. Die Rippen dienen aber nicht nur der Verstärkung, sondern verhindern auch ein mit Gewalt ausgeübtes zu weites Eintreiben eines Segments in ein anderes, was zu dessen Bruch führen könnte.

Wegen der konischen Ausbildung der Segmente nach den Fig. 4 und 5 bildet das jeweils unterste eines aus Segmenten zusammengesetzten Stabes eine Art Eintreibspitze. Es ist natürlich auch denkbar, neben den dargestellten Segmenten besondere, jeweils als Spitze eines Stabes dienende Segmente dem Verbraucher zu liefern, die sich von den dargestellten dann lediglich dadurch unterscheiden, daß bei ihnen der Segmentkörper nicht in einem Steckzapfen, sondern einer ausgeprägten Spitze endet.

Mit etwa in natürlichem Maßstab dargestellten Segmenten 11 nach den Fig. 4 und 5 kann z. B. aus zwei Segmenten ein Stab von etwa 90 mm Länge, mit z. B. drei Segmenten ein Stab von etwa 140 mm Länge und mit z. B. 7 Segmenten ein solcher von etwa 320 mm Länge zusammengesetzt werden. Die Bereithaltung von Segmenten erleichtert nicht nur den Benutzern die Herstellung von Düngemittelstäben jeweils geeigneter Länge, sondern auch die Herstellung sowie die Lagerhaltung beim Hersteller, Händler und Verbraucher.

Es wird nun auf Fig. 6 Bezug genommen. 17 ist der in diesem Fall nur beispielsweise viereckig dargestellte Pflanztopf erfindungsgemäßer Beschaffenheit und 18 eine in eine Ecke eingeformte, sich nach innen wölbende Ausnehmung, die in Form und Größe einem zusätzlichen Dünge-Element 19 mit einer die Handhabung erleichternden Manschette 20 angepaßt ist. Dabei ist es zweckmäßig, die Länge der Ausnehmung 18 größer als die Länge des Elements 20 zu bemessen, so daß das Element in der Ausnehmung 18 so weit klemmend eingedrückt werden kann, bis seine obere Stirnfläche bündig mit der Topfoberkante verläuft. Dabei bleibt unter dem eingesetzten Element ein freier Raum, der es erlaubt, z.B. mit dem Daumen, das Element für die Anwendung aus der Ausnehmung nachoben herauszuschieben. Der Topf kann auch mehrere Ausnehmungen 18, z.B. in diagonal gegenüberliegenden Ecken, aufweisen.

Es versteht sich, daß der Pflanztopf, der aus dem erfindungsgemäßen Kunststoff-Düngemittel-Gemisch besteht, nicht notwendigerweise mit dem zusätzlichen Düngeelement versehen sein muß.

## Patentansprüche

1. Werkstoff mit Langzeit-Düngewirkung,
**dadurch gekennzeichnet,**
daß er aus einem Gemisch besteht, welches einen biologisch abbaubaren, plastifizierbaren Kunststoff und ein Düngemittel oder eine Düngemittelmischung enthält.

2. Werkstoff nach Anspruch 1,
dadurch gekennzeichnet, daß seine Bestandteile in einem Extruder erhitzt werden, wobei der Kunststoff plastifiziert wird, und die Bestandteile anschließend als Gemisch extrudiert werden.

3. Werkstoff nach Anspruch 1 oder 2,
dadurch gekennzeichnet, daß er zusätzlich oder anstelle des Düngemittels ein Insektizid und/oder Pestizid und/oderFungizid und/oder Herbizid und/oder Wachstumsregulatoren enthält.

4. In das Erdreich eintreibbarer Stab für die Pflanzendüngung, insbesondere Baumdüngung,
dadurch gekennzeichnet, daß er aus einem Werkstoff nach einem der Ansprüche 1 bis 3 hergestellt ist.

5. Düngemittelstab nach Anspruch 4,
dadurch gekennzeichnet, daß der Stab (1) aus einem zylindrischen Stabkörper (2) und einer Eintreibspitze (3) besteht.

6. Düngemittelstab nach den Ansprüchen 4 oder 5,
dadurch gekennzeichnet, daß er eine oder mehrere, von der oberen Stirnfläche ausgehende, die gesamte Länge oder einen Teil derselben einnehmende Axialbohrungen (5) aufweist.

7. Düngemittelstab nach einem oder mehreren der Ansprüche 4 bis 6,
dadurch gekennzeichnet, daß er aus einzelnen Segmenten aufgebaut ist.

8. Segment für die Bildung eines Düngemittelstabes nach Anspruch 7,
gekennzeichnet durch einen zylindrischen Segmentkörper (7) und einen Steckzapfen (8) mit gegenüber dem Segmentkörper geringerem Durchmesser sowie durch eine Ausnehmung (10) an dem dem Steckzapfen (8) gegenüberliegenden Ende des Segmentkörpers (7), die in Länge und Weite dem Steckzapfen (8) angepaßt ist.

9. Pflanztopf, dadurch gekennzeichnet, daß er aus einem Werkstoff nach einem der Ansprüche 1 bis 3 hergestellt ist.

10. Pflanztopf nach Anspruch 9,
dadurch gekennzeichnet, daß dem Kunststoff für einen Topf 2 bis 3 g Düngemittel je Liter Topfvolumen beigemischt ist.

11. Pflanztopf nach Anspruch 9 oder 10,
dadurch gekennzeichnet, daß in seiner Wandung mindestens eine Parkmöglichkeit für ein Düngemittel-Element eingeformt ist.
